Europäisches Patentamt

European Patent Office

Office européen des brevets

(19)

(11) Publication number: **0 068 433**
A1

(12) # EUROPEAN PATENT APPLICATION

(21) Application number: 82105516.7

(22) Date of filing: 23.06.82

(51) Int. Cl.³: **C 08 J 5/18,** C 08 J 7/10, C 08 J 7/14, G 03 C 1/76 // (C08J5/18, C08L25/04, C08K3/22)

(30) Priority: 25.06.81 US 277318

(43) Date of publication of application: 05.01.83 Bulletin 83/1

(84) Designated Contracting States: BE DE FR GB IT NL SE

(71) Applicant: THE DOW CHEMICAL COMPANY, Dow Center 2030 Abbott Road Post Office Box 1967, Midland Michigan 48640 (US)

(72) Inventor: Johnson, Oscar, P.O. Box 12147 1617 Glenn, Columbus Ohio 43212 (US)
Inventor: Luecke, Robert Allen, 1614 Tower Court, Newark Ohio 43055 (US)

(74) Representative: Hann, Michael, Dr. et al, Patentanwälte Dr. Michael Hann Dr. H.-G. Sternagel Marburger Strasse 38, D-6300 Giessen (DE)

(54) Process for the manufacture of synthetic paper and the product thereof.

(57) An improved synthetic film and process for making the synthetic film from a blend of polystyrene and polyethylene resins wherein titanium dioxide is employed as the sole inorganic filler and the film is given an oxidizing post-treatment, such as corona discharge or surface sulfonation. The film so-prepared has improved adhesion to photographic gel emulsions.

EP 0 068 433 A1

0068433

# IMPROVED PROCESS FOR THE MANUFACTURE
# OF SYNTHETIC PAPER AND THE PRODUCT THEREOF

There are a variety of synthetic papers utilized as backing film for photographic gel emulsions. One such synthetic paper/film is formed from a polymer blend comprising a styrene polymer resin, an ethylene polymer resin and an inorganic filler. A synthetic film formed from such a blend is subsequently coated with the photographic gel emulsion and utilized for photographic applications such as phototypesetting film in the newspaper industry and/or as a color print base in commercial photography.

A critical feature of a synthetic film/gel emulsion photographic paper is the degree of adhesion between the film and the gel emulsion. A synthetic paper which is capable of a combination of good dry adhesion and wet adhesion to a photographic gel emulsion is highly desirable.

The present invention involves an improved film and method of preparing a synthetic film from a blend of a styrene polymer resin, an ethylene polymer resin and an inorganic filler so as to provide a film

28,247-F                    -1-

which has the capability of enhanced adhesion to a photographic gel emulsion. More particularly, the improvement comprises (1) utilizing titanium dioxide as the sole inorganic filler in such blend and (2) after the film is formed, oxidizing at least one surface of such film. By utilizing titanium dioxide as the sole inorganic filler material and post-treating the film surface, a photographic gel emulsion subsequently applied has improved adhesion to this film over synthetic paper containing fillers other than titanium dioxide or one which has not been given the oxidizing post-treatment.

In the blend utilized to make the synthetic film, the styrene polymer resin is normally employed as the major component. That is, in an amount of greater than 50 weight percent of the total blend is styrene polymer resin. Usually also present in the blend is an elastomer component which improves the physical properties of the synthetic film so-produced.

A means for oxidizing synthetic resinous film surfaces is by corona discharge. A more preferred means of oxidizing such film surfaces is by surface sulfonation. Both techniques for oxidizing polymer surfaces are known in the art.

The term "styrene polymer resin" refers to polystyrene, copolymers of styrene with one or more copolymerizable ethylenically unsaturated monomers, or blends or grafts of polystyrene with synthetic elastomeric polymers. The term "styrene" is used to denote not only styrene but also alkyl-substituted derivatives of styrene such as α-methyl styrene. Examples of suitable styrene polymer resins are polystyrene, high impact polystyrene, an acrylonitrile styrene copolymer, an acrylonitrile butadiene styrene resin, a methyl methacrylate-styrene copolymer or poly-α-methylstyrene.

The term "ethylene polymer resin" refers to polyethylene or copolymers of ethylene with one or more copolymerizable ethylenically unsaturated monomer. Suitable ethylene polymer resins include high density polyethylene, medium density polyethylene, low density polyethylene, chlorinated polyethylene, ethylene-higher alkene copolymers, ethylene-vinyl acetate copolymers, ethylene-vinyl chloride copolymers, ethylene-ethyl acrylate copolymers, and ethylene-acrylic acid copolymers and ionomers.

Mixtures of styrene polymer resins as well as mixtures of ethylene polymer resins can be used.

As noted above, the blend utilized to make the synthetic film preferably also contains an elastomer polymer compound such as polybutadiene, a styrene--butadiene rubber, and an acrylonitrile-butadiene rubber, which is known in the art to improve the physical properties of the synthetic film so-produced. In one aspect, this elastomer compound acts as a compatibilizer between the styrene polymer resin and the ethylene polymer resin.

A critical element of the film and method of the present invention is in the use of titanium dioxide from 2 to 20 percent by weight of the total weight of the blend as the sole inorganic filler in the synthetic film blend. The titanium dioxide may be obtained from a variety of commercial sources.

In a preferred embodiment of the present invention, the blend comprises from 78 to 88 weight percent styrene polymer resin, from 3 to 6 weight percent ethylene polymer resin, from 3 to 6 weight percent of an elastomer compound, and from 6 to 10 weight percent titanium dioxide. Most preferably, such blend is prepared from styrene homopolymer or from thermoplastic styrene-butadiene copolymer (high impact polystyrene), ethylene homopolymer and an elastomeric styrene-butadiene block copolymer and titanium dioxide. The individual blend components and the overall blend can also include other additives which are normally incorporated into resin blends such as stabilizers, anti-static agents, plasticizers, colorants, and antioxidants.

In particular, an antistatic quality of the film of the present invention can be imparted in a variety of ways. Known antistatic additives, such as polyethylene oxide, can be incorporated into the overall resin blend or blended with a portion of the resin which is then coextruded as a thin layer on the side of the base film which is not to receive the gel emulsion. It has also been observed that surface sulfonation, a preferred technique of film post-treatment, also provides the film with an antistatic character.

The blend components can be mixed together in any order and the blend so-made prepared into a film by conventional techniques, such as extrusion or blown bubble methods. Film thickness generally utilized in newspaper applications is within the range of from 2 to 5 mils; that generally used in commercial photography is within the range of from 8 to 10 mils.

28,247-F                    -4-

In another critical aspect of the present invention, the film made from the prescribed blend is given an oxidizing post-treatment prior to contact or coating with a photographic gel emulsion. This oxidizing post-treatment is carried out by corona discharge or, preferably, by surface sulfonation. Surface treatments for polymer surfaces are known in the art. Corona discharge treatment can be effected in air and under atmospheric pressure with conventional equipment using a high frequency, high voltage generator. Discharge is conveniently accomplished by passing the film over a dielectric support roller at a discharge station at a prescribed film speed. The discharge electrodes (treater bar) are positioned a short distance from the moving film surface.

Surface sulfonation of the synthetic film can be carried out in the vapor phase using gaseous sulfur trioxide, normally in an inert diluent such as carbon dioxide, nitrogen or air. The surface sulfonation can also be carried out in a liquid phase utilizing dilute sulfur trioxide in an inert liquid such as a chlorinated solvent.

Oxidation of the film surface can be measured by a wetting test value. Generally, an untreated film surface has a wetting tension of 34 to 38 dynes/cm. Film surface oxidation or activation by corona discharge, surface sulfonation or similar treatment produces a film surface wetting tension above 40 dynes/cm. Corona discharge treatment conditions such as time, temperature, power output, electrical potential, distance of the treater bar from the moving film and other variables can be adjusted so long as this increased wetting tension is obtained. The same can be said for sulfonation conditions such as time, temperature, sulfur trioxide concentration and the amount of surface sulfonation obtained.

By utilizing the improvement of the present invention, a synthetic film is produced which has the capability of improved overall adhesion to a photographic gel emulsion. This adhesion is measured by a combination of dry (so-called pre-dry and post-dry adhesion) and wet adhesion.

Example 1

A synthetic film was prepared from a blend comprising (percent by weight) 10 percent styrene-homopolymer and 78 percent styrene-butadiene copolymer, 3 percent low density ethylene homopolymer, 3 percent of a styrene-butadiene block copolymer and 6 percent titanium dioxide. The titanium dioxide was blended with the polyethylene and this preblend admixed with the remaining components. The film was prepared from such blend by conventional extrusion on blown film equipment. The film so-produced, 4 mils thick, was oxidized in a post-treatment by subjecting a surface of the film to corona discharge or surface sulfonation. The amount of corona discharge was measured in terms of watt density, which equals the voltage times the amperage divided by the treater bar width in feet times the film speed in feet per minute.

A gel emulsion stock solution was prepared by admixing 462 grams of water with 71.4 grams of gelatin, heating the mixture to 100°F (37.8°C) to dissolve the gelatin, adding 30 milliliters (ml) of methanol, then

0068433

adding 119 ml of Congo Red (sodium diphenyl-bis-alpha naphthylamine-sulfonate) solution (17.5 grams/1000 ml of water) and 10.5 grams of Saponium solution (111 grams/1000 ml of water). The stock solution was divided into 99 gram portions and stored at about 40°F (4.4°C) until used.

The photographic gel emulsion was applied onto the oxidized surface of the film to form a gel coating having a thickness of 0.2 microns. The film and the gel coating (previously admixed with 0.38 ml of formaldehyde) was heated to about 100°F (31.8°C) and allowed to cool to 40-45°F (4.4-7.2°C) and then post-heated to 95°F (35°C) for 30 minutes to dry. After aging overnight at room temperature, the following pre-dry, wet and post-dry adhesion measurements were made on film samples.

Pre-dry Adhesion Test - a film sample was scribed into 25 squares. A #610 grade Scotch Brand adhesive tape was contacted with the entire sample and manual force applied in an attempt to pull the gel away from the film substrate. The tape was pulled until one or more squares failed or a maximum of 8 pulls if no failure was observed. The number of squares out of the 25 squares in which the gel did separate from the film substrate were counted. For convenience, the film sample so-tested was graded from 1 to 5 (1 = no failure; 2 = 1 or 2 failures; 3 = 3 to 5 failures; 4 = 6 failures; and 5 = 7 or more failures).

Wet Adhesion Test - film samples were immersed in commercial photographic developer at a pH of 9-10 for 5 minutes, rinsed and immersed in photographic

28,247-F                    -7-

fixer solution for 2 minutes, and finally washed in water for 2 minutes. Following such washing, the gel-coated film surface was scribed into 9 diamond-shaped figures with a scribing tool such as a hand-held fork. Adhesion of the gel coating to the film was tested by a hand-held piece of cork which was then vigorously rubbed over the scribed surface. The diamonds in which the gel came loose from the film substrate were observed. For convenience, the film after testing was categorized from 1 to 5 with 1 exhibiting essentially no failure and 5 exhibiting one or more diamonds with 25 percent or more of the gel loosened from the diamond.

Post-dry Adhesion Test - film samples were subjected to the above developer/rinse/fixer/wash cycle noted in the wet adhesion test. After the samples had aged overnight at room temperature, they were scribed into 25 squares and tested in the same manner as was done with samples of film in the pre-dry adhesion test. Film samples were categorized accordingly.

: The film samples were subjected to corona discharge (24 watt density) and then coated with the gel emulsion, all as described above. The samples exhibited a pre-dry and post-dry adhesion value of 1 - no failure, although the wet adhesion value was 5. Similar results were obtained for samples subjected to corona discharge at 8, 9.5 and 16.4 watt densities.

Similar film samples were subjected to surface sulfonation (gaseous treatment) and then coated with the gel emulsion, all as described above. These samples exhibited pre-dry, post-dry and wet adhesion values of 1 - no failure.

Similar pre-dry, post-dry and wet adhesion tests were run on other film samples prepared from blends of the same materials as noted above except that the inorganic filler instead of titanium dioxide was barium titanate, calcium carbonate, calcium carbonate/-titanium dioxide blend, silicon dioxide, or silicon dioxide/titanium dioxide blend. In each of these cases, film samples tested measured pre-dry and post-dry adhesion values of 5 as well as a wet adhesion value of 5. This demonstrates the improved dry adhesion and overall adhesion achieved by the improvement of the present invention.

Example 2

Film samples were prepared from the following polymer blends: 10 weight percent styrene homopolymer, 77 weight percent styrene-butadiene copolymer (high impact polystyrene), 3 weight percent ethylene homopolymer, 3 weight percent elastomeric styrene-butadiene block copolymer, and 7 weight percent titanium dioxide. Blown film (4 mils thickness) was prepared from the above blend.

Film samples were then subjected to a corona discharge treatment of a watt density of 8, 16 and 24. Measurement of the resulting oxidized surface showed an increase in wetting tension from about 36 dynes/cm to greater than 40 dynes/cm.

Film samples were then coated with a photographic gel emulsion (0.2 micron layer) as in Example 1. Adhesion tests for pre-dry, wet and post-dry adhesion were made on the film samples. Film samples not containing $TiO_2$ (C.R. - Comparison Runs) were also gel coated and tested. The table below give the results.

0068433

## TABLE

| Example | Watt Density | Pre-Dry | Wet | Post-Dry |
|---|---|---|---|---|
| C.R. 1 | 0 | 5 | 5 | 5 |
| C.R. 2 | 8 | 5 | 5 | 5 |
| C.R. 3 | 16 | 5 | 5 | 5 |
| C.R. 4 | 24 | 5 | 5 | 5 |
| Example 1 | 8 | 3 | 5 | 3 |
| Example 2 | 16 | 1 | 5 | 5 |
| Example 3 | 24 | 2 | 2 | 2 |

0068433

1. A film comprising a blend of a styrene polymer resin, an ethylene polymer resin, and an inorganic filler, the improvement which comprises utilizing titanium dioxide in an amount of from 2 to 20 percent by weight of the blend as the sole inorganic filler and oxidizing at least one surface of the film so-prepared, thereby obtaining a synthetic film having the capability of enhanced adhesion to a photographic gel emulsion.

2. The film of Claim 1, wherein the blend comprises from 3 to 6 weight percent ethylene polymer, from 3 to 6 weight percent of an elastomeric polymer compound, and the balance being the styrene polymer resin.

3. The film of Claim 1, wherein the blend comprises from 78 to 88 weight percent styrene polymer resin, from 3 to 6 weight percent ethylene polymer resin, from 3 to 6 weight percent of an elastomeric polymer compound, and from 2 to 8 weight percent titanium dioxide.

4. The film of Claim 2 or 3, wherein the styrene polymer resin is a styrene homopolymer or a thermoplastic styrene-butadiene copolymer, the ethylene polymer resin is ethylene homopolymer and the elastomeric compound is a styrene-butadiene block copolymer.

5.  The film of any one of the preceding Claims wherein the film surface is oxidized by corona discharge.

6.  The film of Claim 5, wherein the watt density employed in the corona discharge treatment is greater than about 8.

7.  The film of any one of Claims 1 to 4, wherein the film surface is oxidized by surface sulfonation.

8.  The film of any one of the preceding Claims wherein the blend also includes an anti-static agent.

9.  A method of preparing a synthetic film comprising the steps of blending a styrene polymer resin, an ethylene polymer resin, and an inorganic filler, the improvement which comprises utilizing titanium dioxide in an amount of from 2 to 20 percent by weight of the blend as the sole inorganic filler, forming the blend into a film, and oxidizing at least one surface of the film thereby obtaining a film having the capability of enhanced adhesion to a photographic gel emulsion.

10.  The method of Claim 9, wherein the blend comprises from 3 to 6 weight percent ethylene polymer, from 3 to 6 weight percent of an elastomeric polymer compound, and the balance being the styrene polymer resin.

11.  The method of Claim 9, wherein the blend comprises from 78 to 88 weight percent styrene polymer

0068433

resin, from 3 to 6 weight percent ethylene polymer resin, from 3 to 6 weight percent of an elastomeric polymer compound, and from 2 to 8 weight percent titanium dioxide.

12. The method of CLaim 10 or 11, wherein the styrene polymer resin is a styrene homopolymer or a thermoplastic styrene-butadiene copolymer, the ethylene polymer resin is ethylene homopolymer and the elastomeric compound is a styrene-butadiene block copolymer.

13. The method of any one of Claims 9 to 12 including the step of adding an antistatic agent to the blend.

14. The method of any one of Claims 9 to 13, including the step of oxidizing the film surface by corona discharge at a watt density of greater than 8.

15. The method of anyone of Claims 9 to 13, including the step of oxidizing the film surface by surface sulfonation.

16. A synthetic film/gel emulsion photographic paper comprising the film of any one of Claims 1 to 8 and a photographic gel emulsion coating on the oxidized surface of said film.

## DOCUMENTS CONSIDERED TO BE RELEVANT

| Category | Citation of document with indication, where appropriate, of relevant passages | Relevant to claim |
|---|---|---|
| | DE - A - 1 929 339 (SEKISUI KAGAKU) | |
| X | + Claims; page 9, lines 10-14; page 10, lines 11-15 + | 1-5, 8-13 |
| Y | + Page 17, lines 7-12 + | 16 |
| | -- | |
| | DE - A - 1 934 096 (SEKISUI KAGAKU) | |
| X | + Claims 1-6; page 14, line 11 - page 15, line 13 + | 1,2,4, 5,8-10, 12,13 |
| Y | + Page 15, line 14 - page 17, line 1; page 24, lines 7-12 + | 7,15, 16 |
| | -- | |
| Y | CH - A - 377 644 (RUTGERS) | 16 |
| | + Page 2, lines 6-39 + | |
| | -- | |
| Y | GB - A - 1 421 046 (THE DOW CHEM. COMP.) | 7,15 |
| | + Claim 8 + | |
| | ---- | |

**CLASSIFICATION OF THE APPLICATION (Int. Cl. 3)**

C 08 J 5/18
C 08 J 7/10
C 08 J 7/14
G 03 C 1/76//
(C 08 J 5/18,
C 08 L 25/04,
C 08 K 3/22)

**TECHNICAL FIELDS SEARCHED (Int.Cl. 3)**

C 08 J
G 03 C

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons
&: member of the same patent family, corresponding document

| | | | |
|---|---|---|---|
| X | The present search report has been drawn up for all claims | | |

| Place of search | Date of completion of the search | Examiner |
|---|---|---|
| VIENNA | 24-09-1982 | WEIGERSTORFER |